(19) Europäisches Patentamt
European Patent Office
Office européen des brevets

(11) **EP 3 239 901 A1**

(12) **DEMANDE DE BREVET EUROPEEN**

(43) Date de publication:
**01.11.2017 Bulletin 2017/44**

(51) Int Cl.:
*G06K 9/00* (2006.01)   *G10H 1/40* (2006.01)

(21) Numéro de dépôt: **17167624.0**

(22) Date de dépôt: **21.04.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **26.04.2016   FR 1653668**

(71) Demandeur: **Commissariat à l'énergie atomique et aux énergies alternatives**
**75015 Paris (FR)**

(72) Inventeurs:
• **SCHEFLER, Pierre**
  **38240 MEYLAN (FR)**
• **DAVID, Dominique**
  **38640 CLAIX (FR)**

(74) Mandataire: **Brevalex**
**95, rue d'Amsterdam**
**75378 Paris Cedex 8 (FR)**

(54) **PROCÉDÉ D'IDENTIFICATION DES GESTES ÉLÉMENTAIRES D'UN MOUVEMENT ET SYSTÈME METTANT EN OEUVRE UN TEL PROCÉDÉ**

(57)   Procédé d'identification d'un mouvement d'un objet comportant plusieurs geste élémentaires, ledit procédé comportant les étapes de :
a) mesure des positions absolues de l'objet dans l'espace au cours du temps,
b) calcul d'une vitesse de l'objet et détection d'au moins une valeur de vitesse minimale prise par l'objet à partir des positions absolues de l'objet,
c) calcul des angles entre deux vecteurs vitesse consécutifs et détection d'au moins une valeur d'angle maximale,
d) identification de l'instant de passage d'un geste élémentaire à un autre à partir de l'instant de détection de la valeur minimale de la vitesse de l'objet et de l'instant de détection de la valeur maximale de l'angle.

**Fig. 1B**

EP 3 239 901 A1

**Description**

## DOMAINE TECHNIQUE ET ÉTAT DE LA TECHNIQUE ANTÉRIEURE

La présente invention se rapporte à un procédé d'identification des gestes élémentaires d'un mouvement et à un système d'identification mettant en oeuvre un tel procédé.

Il est intéressant de pouvoir identifier de manière précise le mouvement d'un objet dans l'espace, par exemple il est intéressant d'identifier les mouvements d'un être humain afin d'utiliser ces mouvements pour commander un dispositif.

Dans le domaine musical, un chef d'orchestre dirige l'orchestre au moyen d'une battue effectuée généralement d'une main en tenant une baguette.

Le temps de la musique est habituellement indiqué par la main droite du chef d'orchestre. La baguette trace une forme dans l'espace en fonction du rythme pour marquer chaque pulsation d'un geste élémentaire.

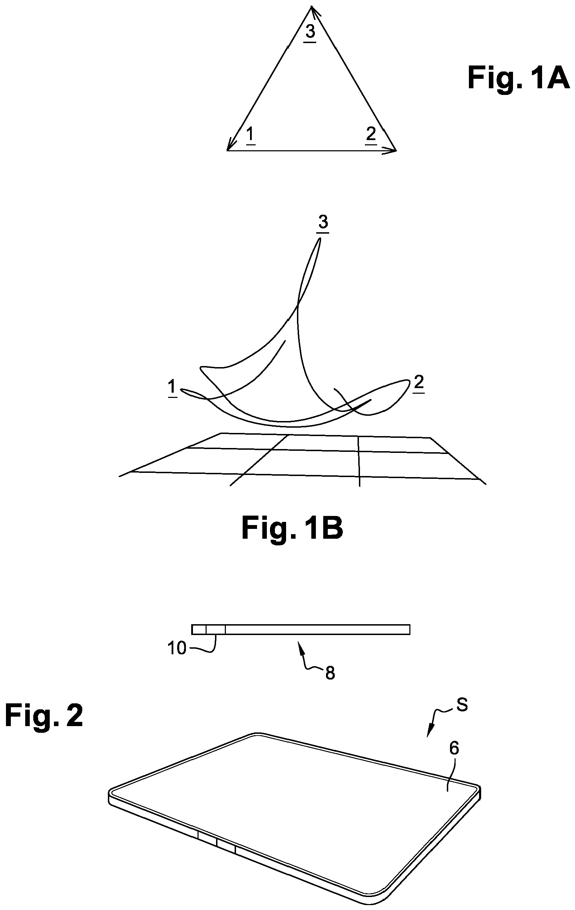

Une battue peut être décomposée en une succession de gestes élémentaires. Sur la figure 1A, on peut voir représentée une battue à trois temps de manière schématique, la fin de chaque geste élémentaire correspondant à un temps.

Les changements de tempo sont indiqués en changeant la vitesse de battue de la mesure. Pour diriger un ralentissement, le chef d'orchestre peut battre en plus des subdivisions du temps.

On peut envisager de vouloir diriger un orchestre virtuel et pour cela il est nécessaire qu'un ordinateur puisse interpréter la direction donnée par le chef d'orchestre.

Or, la représentation de la figure 1A est schématique, en réalité chaque personne réalisant une battue va effectuer des gestes élémentaires qui peuvent s'écarter sensiblement de segments représentés sur la figure 1A. Certains ont tendance à faire des gestes élémentaires plus arrondis alors que d'autres font des gestes élémentaires plus rectilignes. Sur la figure 1B, on peut voir un exemple d'une battue à trois temps réalisée par un être humain. Le dessin de cette battue réelle diffère sensiblement de celui de la figure 1A, il comporte des boucles entre les temps et des segments courbes.

Différents dispositifs ont été mis au point pour conduire un orchestre virtuel par exemple le dispositif appelé « Digital Baton » décrit dans le document Optical Tracking for Music and Dance Performance J. Paradiso, F. Sparacino, in "Optical 3-D Measurement Techniques IV", A. Gruen, H. Kahmen eds., Herbert Wichmann Verlag, Heidelberg Germany, pp. 11-18 (1997). Cette baguette comporte une diode électroluminescente à une de ses extrémités qui est suivie de manière précise, le déplacement de la diode sert à la direction de l'orchestre. La baguette comporte également des capteurs pour mesurer la pression des doigts et du pouce. Des accéléromètres équipent également la baguette pour mesurer les changements de vitesse et les rythmes et fournir également une indication sur l'orientation de la baguette. Ce dispositif est complexe et il n'est pas décrit comment sont lus ou interprétés les déplacements de la diode électroluminescente pour diriger l'orchestre virtuel.

## EXPOSÉ DE L'INVENTION

C'est par conséquent un but de la présente invention d'offrir un procédé d'identification des gestes élémentaires d'un mouvement d'un objet, par exemple d'identification des gestes élémentaires d'une battue de chef d'orchestre en vue de contrôler le tempo et la lecture d'une oeuvre musicale.

Le but énoncé ci-dessus est atteint par un procédé d'identification comportant les étapes :

- repérage de la position absolue d'un objet dans l'espace en fonction du temps,
- détermination du passage d'un geste élémentaire à un autre par détection d'un minimum dans la variation de la vitesse de déplacement de l'objet et d'un maximum d'angle entre deux déplacements permettant de détecter un changement de direction correspondant au passage d'un geste élémentaire à l'autre.

Dans le cas d'une battue de chef d'orchestre, ce passage d'un geste élémentaire à l'autre peut être identifié comme un temps. En détectant les différents temps, le tempo souhaité par la personne dirigeant l'orchestre peut être déterminé et être utilisé pour faire lire la partition par un orchestre virtuel.

En d'autres termes, les inventeurs ont observé que dans le cas de mouvements qui pouvaient être modélisés par une succession des segments, chaque segment correspondant à un geste élémentaire, la vitesse pendant le geste élémentaire variait et passait par un minimum lorsque l'on passait d'un geste élémentaire à l'autre. En outre, les inventeurs ont pensé à mesurer l'angle entre deux vecteurs vitesse successifs. Lorsque cet angle passe par un maximum, c'est que le passage d'une geste élémentaire à un autre a eu lieu. En combinant les informations obtenues par la variation de la vitesse et celles obtenues par la variation de l'angle, on obtient des informations très précises sur les changements de direction. On peut donc reconstruire le mouvement et utiliser cette reconstruction pour réaliser des commandes, par exemple d'un orchestre virtuel.

Par exemple, la mesure des positions dans l'espace de l'objet peut être réalisée aux moyens d'un réseau de magnétomètres disposés dans un plan, repérant le déplacement d'un ou de plusieurs aimants portés par l'objet.

Dans un exemple avantageux, l'objet dont on souhaite identifier le mouvement comporte au moins un aimant permanent et le système d'identification comportant un réseau de magnétomètres permettant une détection absolue de la position de l'objet dans l'espace.

La présente invention a alors pour objet un procédé d'identification d'un mouvement d'un objet comportant plusieurs gestes élémentaires, ledit procédé comportant les étapes de :

a) mesure des positions absolues de l'objet dans l'espace au cours du temps,
b) calcul d'une vitesse de l'objet et détection d'au moins une valeur de vitesse minimale prise par l'objet à partir des positions absolues de l'objet,
c) calcul des angles entre deux vecteurs vitesse consécutifs et détection d'au moins une valeur d'angle maximale,
d) identification de l'instant de passage d'un geste élémentaire à un autre à partir de l'instant de détection de la valeur minimale de la vitesse de l'objet et de l'instant de détection de la valeur maximale de l'angle.

Lors de l'étape a), un filtrage des valeurs de position absolue de l'objet a avantageusement lieu, par exemple un filtrage récursif d'ordre 1.

Lors de l'étape b) et/ou de l'étape c), un filtrage des valeurs de vitesse et/ou d'angle a ou ont avantageusement lieu, par exemple un filtrage récursif d'ordre 1.

Lors de l'étape c), un seuillage de valeurs d'angle peut avoir lieu, rendant égale à zéro toute valeur inférieure ou égale à une valeur donnée.

Dans un exemple préféré, après l'identification de l'instant du passage d'un geste élémentaire à un autre, un autre instant du passage d'un geste élémentaire à un autre geste élémentaire n'est identifié que si l'angle a pris au moins une valeur inférieure à une valeur donnée depuis la dernière identification.

La présente invention a également pour objet un procédé d'identification des temps d'une battue d'un chef d'orchestre mettant en oeuvre le procédé d'identification selon l'invention, dans lequel l'objet dont le mouvement est à identifier est une baguette.

Le procédé d'identification des temps d'une battue d'un chef d'orchestre comporte avantageusement une étape de détermination d'un tempo.

La présente invention a également pour objet un procédé de commande d'un orchestre virtuel et/ou d'un instrument de musique mettant en oeuvre le procédé d'identification des temps selon l'invention, le procédé de commande utilisant le tempo pour commander la lecture d'une partition par l'orchestre virtuel et/ou l'instrument de musique.

Il peut être prévu que le procédé de commande commande un volume sonore d'interprétation de l'orchestre virtuel et/ou de l'instrument de musique en fonction de la vitesse de déplacement de l'objet et/ou d'une amplitude des gestes élémentaires.

La présente invention a également pour objet un système d'identification du mouvement d'un objet comportant :

- l'objet,
- des moyens pour mesurer des positions absolues de l'objet dans l'espace au cours du temps,
- des moyens de traitement des mesures fournies par les moyens de mesure des positions absolues, les moyens de traitement étant tels :
- qu'ils calculent une vitesse de l'objet et détectent au moins une valeur de vitesse minimale prise par l'objet,
- qu'ils calculent un angle entre deux vecteurs vitesse consécutifs et détectent au moins une valeur d'angle maximale,
- qu'ils identifient l'instant de passage d'un geste élémentaire à un autre à partir de l'instant de détection de la valeur minimale de la vitesse de l'objet et de l'instant de détection de la valeur maximale de l'angle.

Dans un exemple avantageux, les moyens de mesure comportent un réseau de magnétomètres et l'objet comporte au moins un aimant permanent.

La présente invention a également pour objet un système de commande d'un orchestre virtuel et/ou d'un instrument mettant en oeuvre un système d'identification selon l'invention, dans lequel l'objet est une baguette comportant l'aimant permanent et le réseau de magnétomètres est logé dans un boîtier en forme de tablette au-dessus duquel la baguette est destinée à être déplacée. L'aimant permanent est de préférence dans une zone de la baguette destinée à être dans une main d'un utilisateur.

## BRÈVE DESCRIPTION DES DESSINS

La présente invention sera mieux comprise sur la base de la description qui va suivre et des dessins en annexe sur lesquels :

- la figure 1A est une représentation schématique d'une battue à trois temps,
- la figure 1B est une représentation réelle d'une battue à trois temps,
- la figure 2 est une représentation schématique d'un système d'identification des différentes parties d'un mouvement,
- la figure 3 est une représentation réelle d'une battue à quatre temps que l'on souhaite utiliser pour diriger un orchestre virtuel,
- la figure 4 est une représentation graphique de la variation de la vitesse de déplacement d'un point de la baguette et de la variation de son accélération en fonction du temps dans le cas de la battue de la figure 3,
- la figure 5 est une représentation schématique d'une partie d'une battue avec passage d'un temps à un autre en utilisant les vecteurs vitesse,
- la figure 6 est une représentation graphique de la variation de la vitesse de déplacement d'un point de la baguette et de l'angle entre deux vecteurs vitesse successifs pour une battue quelconque en fonction du numéro de l'échantillon,

- la figure 7 est une représentation graphique de la variation de la vitesse de déplacement d'un point de la baguette et de l'angle entre deux vecteurs vitesse successifs pour une battue quelconque, un seuil étant appliqué à la valeur de l'angle, celui-ci étant mis à zéro lorsqu'il est inférieur à une valeur donnée : 8 dans l'exemple représenté,
- la figure 8 représente une représentation d'un organigramme d'un procédé d'identification des différentes parties d'un mouvement selon l'invention,
- la figure 9 est une représentation graphique des temps identifiés par le procédé d'identification selon l'invention.

## EXPOSÉ DÉTAILLÉ DE MODES DE RÉALISATION PARTICULIERS

Dans la description qui va suivre, l'invention sera décrite plus particulièrement dans l'application à l'identification d'une battue de chef d'orchestre par exemple pour diriger un orchestre virtuel ou lire une oeuvre musicale, mais il sera compris que la présente invention peut s'appliquer à la détection de tout mouvement modélisable par une succession de segments. Par exemple il peut s'agir du déplacement d'un stylo lors d'une phase d'écriture, la plupart des lettres pouvant être modélisées par une succession de segments, ou il peut s'agir du vol d'un insecte.

Dans la description qui va suivre, on considère qu'un mouvement est composé d'une succession de gestes élémentaires. Chaque geste élémentaire est composé d'un ou de plusieurs segments.

Sur la figure 2, on peut voir un exemple d'un système d'identification d'un mouvement pour la mise en oeuvre du procédé d'identification selon l'invention, le système est représenté schématiquement. Le système d'identification permet de connaître la position absolue dans l'espace d'un objet dont on veut identifier le mouvement.

Le système S comporte un réseau de magnétomètres réparti dans un plan et logé dans un boîtier 6 en forme de tablette destiné par exemple à être disposé sur un pupitre de chef d'orchestre. Le système S comporte également un objet 8 dont on souhaite suivre le mouvement, par exemple d'un objet en forme de baguette de chef d'orchestre. La baguette comporte un aimant 10. L'aimant est un aimant permanent qui génère un moment magnétique non nul même en l'absence de champ magnétique extérieur, l'intensité du champ magnétique mesurée par les magnétomètres varie en fonction de la position dans l'espace de l'aimant par rapport aux magnétomètres. Le boîtier est relié à un système informatique destiné à traiter les mesures fournies par les magnétomètres, et à envoyer des instructions à un orchestre virtuel ou à un instrument électrique tel qu'un piano électrique. Un électroaimant pourrait être utilisé à la place de l'aimant permanent.

L'aimant est destiné à être déplacé sensiblement dans le volume situé au-dessus de la tablette sachant que si l'aimant sort légèrement de ce volume, il sera encore détecté par les magnétomètres.

De manière avantageuse, l'aimant est situé dans la partie de la baguette en contact avec la main de l'utilisateur, ce qui réduit les risques que l'aimant soit en dehors du volume au droit de la tablette.

Par exemple la tablette comporte 32 capteurs.

Le système appelé Slate® fabriqué par l'entreprise ISKN est adapté pour fournir la position absolue dans l'espace d'un objet. Un tel système est décrit dans le document WO2013/144342.

De préférence, on détecte le déplacement d'un objet tenu par la main et non directement le déplacement de la main ou d'une autre partie du corps, ce qui offre une détection plus précise. En outre, des systèmes suivant directement les parties du corps et mettant en oeuvre des caméras de profondeur nécessitent des algorithmes de reconnaissances des parties du corps qui sont souvent bruités. En outre, en choisissant un objet à suivre par exemple un aimant de petite taille, le mouvement que l'on souhaite identifier risque moins d'être dénaturé.

Tout autre système pouvant fournir une position absolue d'un objet dans l'espace peut convenir. Par exemple un système comportant deux caméras permettent d'obtenir une image en largeur, hauteur et profondeur, cette image est ensuite traitée pour en extraire des informations comme la position des mains, des doigts et des phalanges ou encore certains gestes réalisés par la personne.

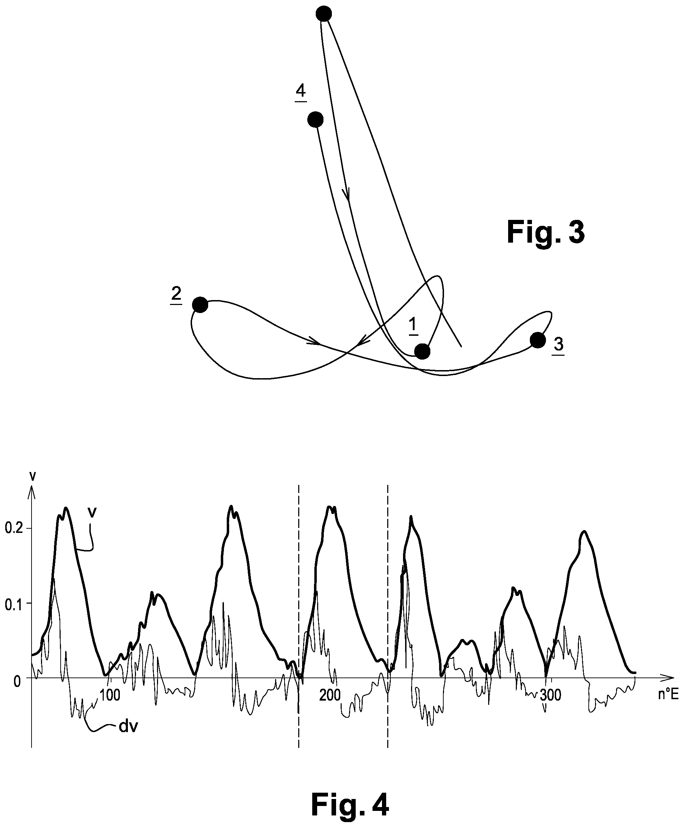

Sur la figure 3, on peut voir représentée une battue à quatre temps réalisée par un être humain. Par convention, le premier temps est réalisé par un geste élémentaire orienté vers le bas, et le temps est à la fin du geste élémentaire. Comme nous le verrons par la suite, ceci n'est pas limitatif et peut être modifié en changeant les paramètres d'identification.

Dans la suite de la description, on parlera indifféremment de la position de la baguette ou de l'aimant, de la vitesse de déplacement de la baguette ou de l'aimant et de l'accélération de la baguette ou de l'aimant.

La battue de la figure 3 comporte quatre gestes élémentaires sans compter le geste élémentaire destiné à mettre la baguette en position de début de la battue. Les ronds désignés par les chiffres 1, 2, 3, 4 indiquent les temps et les flèches le sens de déplacement de la baguette.

Le procédé selon l'invention comporte deux groupes d'étapes destinés à être exécutés simultanément ou successivement et destinés chacun à détecter l'indication d'un temps par la personne manipulant la baguette.

Le premier groupe d'étapes de détection utilise la vitesse de l'aimant et le deuxième groupe d'étapes de détection utilise l'angle du mouvement de l'aimant.

Sur la figure 3 est également symbolisée la variation de la vitesse de chaque geste élémentaire, plus le niveau de gris est clair plus la vitesse de déplacement de la baguette est élevée et plus le niveau de gris est foncé plus la vitesse de déplacement de la baguette est lente.

Les inventeurs ont constaté que les vitesses de déplacement augmentaient puis diminuaient d'un temps à l'autre, ce qui est particulièrement visible entre le temps 1 et le temps 2 et entre le temps 2 et le temps 3.

Sur la figure 4, on peut voir la variation de la vitesse V de la baguette au cours du temps t ainsi que celle de l'accélération dV de la baguette. La vitesse est en m/échantillon et l'axe des abscisses décrit le numéro de l'échantillon n°E, (10 ms séparant deux échantillons). La vitesse et l'accélération ont été extraites des positions successives de l'aimant dans l'espace. La vitesse est calculée avec la norme 1 (v=|x2-x1|+|y2-y1|+|z2-z1|) et l'accélération est la soustraction de deux valeurs de vitesse consécutives.

Les instants de mesure sont désignés « échantillons » qui sont espacés les uns des autres d'une durée fixe.

La variation de la vitesse comporte une succession de maximums et de minimums. Au vu de l'analyse du mouvement de la baguette de la figure 3, le temps est marqué à chaque fois que la vitesse passe par un minimum local, ce qui correspond également à chaque annulation de l'accélération lorsqu'elle est croissante, puisque la vitesse est croissante. Ainsi en détectant les minimums locaux de la vitesse au cours du temps, on obtient une première détection d'un temps.

Le deuxième groupe d'étapes de détection a pour but de détecter les changements de direction de l'aimant.

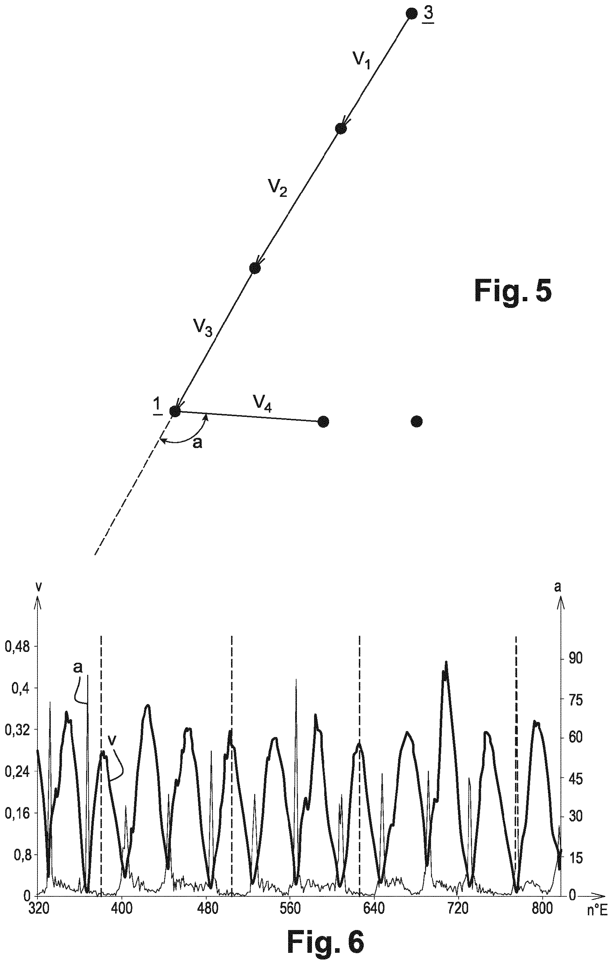

Sur la figure 5, on peut voir schématisée une partie d'une battue, en particulier le passage d'un geste élémentaire à un autre marquant un temps.

Le déplacement de la baguette est représenté par les vecteurs vitesse V1, V2, V3, V4. Les vecteurs vitesse V1 à V3 définissent un geste élémentaire, le vecteur vitesse V4 définit le début du geste élémentaire suivant. On constate que pour un même geste élémentaire les directions des vecteurs vitesse sont proches, i.e. la valeur de l'angle formé entre les directions de deux vecteurs vitesse successifs est faible. En revanche, les directions des vecteurs V3 et V4 sont sensiblement différentes et forment entre elles un angle de valeur élevée, cet angle est désigné a. Pour obtenir la valeur de l'angle entre deux vecteurs vitesse consécutifs on applique la formule

$$a = acos\left(\frac{\overrightarrow{v_n}\cdot\overrightarrow{v_{n-1}}}{\|\overrightarrow{v_n}\|.\|\overrightarrow{v_{n-1}}\|}\right).$$

Sur la figure 6, on peut voir représentées simultanément la variation de vitesse de l'aimant au cours du temps et la variation de l'angle entre deux vecteurs successifs.

On constate une correspondance entre les minimums locaux de la vitesse et les maximums de la valeur d'angle.

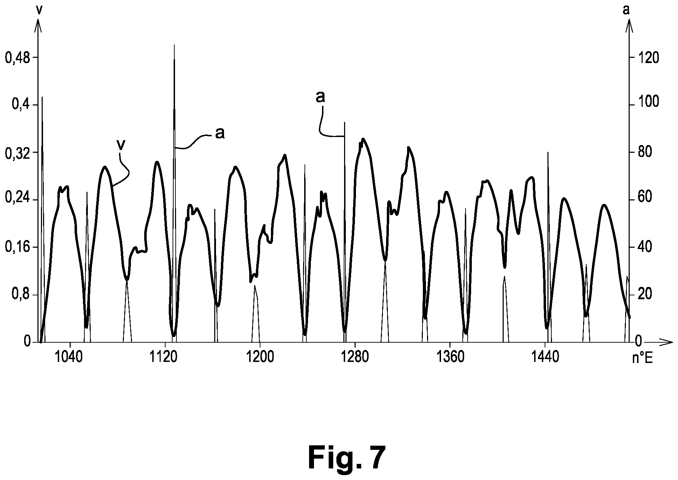

Sur la figure 7, un seuillage de la variation de l'angle à 8° est appliqué, i.e. toute valeur d'angle inférieure à 8° est mise à zéro, ce qui permet de distinguer encore plus nettement ce qui peut être caractérisé de bruit et les pics qui correspondent à un temps.

La variation de l'angle est particulièrement nette aux endroits où un temps est marqué, ce qui permet d'avoir une information précise sur l'instant où un temps est marqué et ceci malgré l'existence de boucles et/ou d'arrondis et/ou d'autres formes qui peut gêner l'interprétation par une machine de l'état de la technique. Dans le cas où l'aimant se déplace idéalement comme sur la figure 1, l'angle passe d'une valeur quasiment nulle à une valeur élevée puis à une valeur quasiment nulle. Dans le cas où l'aimant se déplace selon une boucle, l'angle entre les vecteurs vitesse va croître, atteindre un maximum et décroître. Dans tous les cas un pic apparaît plus ou moins fin, permettant de détecter l'instant du temps.

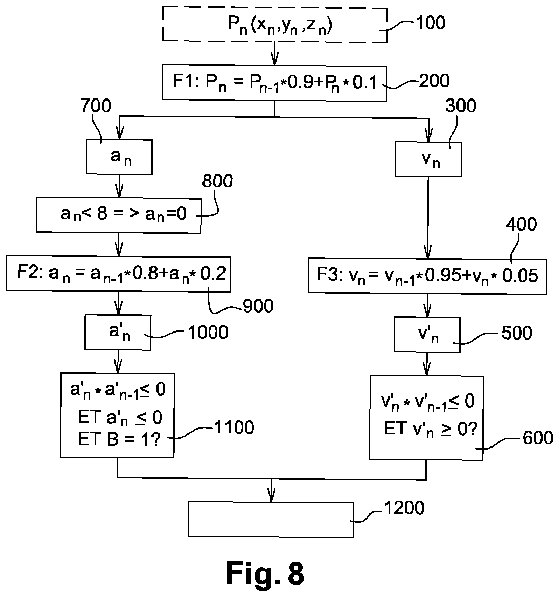

Sur la figure 8 est schématisé un organigramme d'un exemple des étapes du procédé d'identification des temps selon l'invention.

Nous définissons ci-dessous les termes utilisés

- n le numéro de l'échantillon ;
- $P_n = (x_n, y_n, z_n)$ à l'échantillon n ;
- $a_n = acos\left(\frac{\overrightarrow{v_n}\cdot\overrightarrow{v_{n-1}}}{\|\overrightarrow{v_n}\|.\|\overrightarrow{v_{n-1}}\|}\right)$ (I) l'angle entre deux vecteurs vitesse en n avec $\overrightarrow{v_n} = P_n - P_{n-1}$
- $a'_n = a_n - a_{n-1}$ la dérivée de l'angle en n (II);
- $v_n = |x_n - x_{n-1}| + |y_n - y_{n-1}| + |z_n - z_{n-1}|$ la vitesse en n (III);
- $v'_n = v_n - v_{n-1}$ l'accélération en n (IV);

Comme décrit ci-dessus, le procédé d'identification d'un temps comporte deux groupes d'étapes qui ont lieu simultanément. Tout d'abord a lieu la détection des positions absolues de la baguette à l'étape 100. Le procédé peut ensuite comporter une première étape 200 de filtrage appliquée au point $P_n$, permettant avantageusement d'éviter la présence de plusieurs pics successifs dus par exemple à un manque de précision des échantillons captés.

Par exemple, on applique un filtre F1 récursif d'ordre 1. En variante, on peut faire un filtre récursif d'ordre supérieur ou un filtre à réponse impulsionnelle finie comme une moyenne sur les 3 derniers échantillons captés par exemple (Pn = (En + En-1 + En-2) / 3 sachant que En est Pn avant l'application du filtre).

Par exemple

$$P_n = P_{n-1} * \alpha + P_n * (1 - \alpha).$$

$\alpha$ est choisi en fonction du niveau de bruit du système de captation. Par exemple $\alpha$ = 0,9.

Le premier groupe d'étapes comporte une étape 300 qui a lieu après l'étape 200, lors de laquelle on calcule la vitesse $v_n$ en utilisant la relation (III) et les coordonnées filtrées issues de l'étape 200 ou directement les coordonnées non filtrées.

Lors d'une étape suivante 400, on peut avantageusement appliquer un filtre passe-bas F3 à la vitesse, par exemple, on applique un filtre récursif d'ordre 1.

$$v_n = v_{n-1} * \beta + v_n * (1 - \beta)$$

$\beta$ est choisi en fonction du niveau de bruit du système de captation. Par exemple $\alpha$ = 0,95.

Lors d'une étape suivante 500, on calcule la dérivée de la vitesse $v'_n$ au point n en utilisation la relation (IV), on obtient l'accélération.

On vérifie ensuite à l'étape 600, si la vitesse a atteint un minimum.

Par exemple, on vérifie si le produit $v'_n * v'_{n-1} \leq 0$.

En effet si le produit des dérivées des vitesses est négatif, les vitesses $v_n$ et $v_{n-1}$ sont de part et d'autre d'un extremum.

En outre on vérifie le signe de $v'_n \geq 0$.

Si les deux inégalités sont confirmées alors la vitesse a passé un extremum qui est un minimum. On considère alors qu'une première condition est remplie pour décider qu'un temps a été marqué.

Simultanément ou à la suite, est exécuté le deuxième groupe d'étapes comportant une étape 700 de calcul de l'angle $a_n$ en utilisant la formule (I).

Lors d'une étape suivante 700, on peut effectuer un seuillage de la valeur de l'angle $a_n$.

Lorsque la valeur de l'angle $a_n$ est inférieure une valeur donnée $\gamma$, la valeur de l'angle $a_n$ est mise à zéro. La valeur de $\gamma$ est choisie en fonction du niveau de bruit du système de captation. Par exemple $\gamma$ est égale à 8°.

Lors d'une étape suivante 900, on peut avantageusement appliquer un filtre F2 à la valeur de $a_n$, par exemple, on applique un filtre récursif d'ordre 1.

$$a_n = a_{n-1} * \delta + a_n * \delta$$

$\delta$ est choisi en fonction du niveau de bruit du système de captation. Par exemple $\delta$ = 0,8.

Lors d'une étape 900, on calcule la dérivée $a'_n$ de l'angle $a_n$,

Lors d'une étape suivante 1000, on vérifie si

$$a'_n * a'_{n-1} \leq 0$$

$$ET\, a'_n \leq 0$$

En effet si $a'_n * a'_{n-1} \leq 0$, cela signifie que l'angle a passé un extremum et si $a'_n \leq 0$, cela signifie que cet extremum était un maximum.

Si lors de l'étape 1100, on détecte que l'angle $a_n$ a passé un maximum, on considère que la deuxième condition pour décider qu'un temps a été marqué est remplie.

Si les étapes 600 et 1100 ont détecté un minimum et un maximum respectivement alors les deux conditions pour décider qu'un temps a été marqué sont remplies et le système conclut à l'identification d'un temps à l'étape 1200. L'instant auquel le temps est marqué est de préférence celui auquel est détecté le maximum d'angle. En général, il y a un écart faible, voire aucun écart, entre l'instant de survenance du maximum d'angle et l'instant de survenance du minimum de vitesse.

L'utilisation de deux conditions pour identifier la survenue d'un temps permet d'extraire les segments qui composent la battue et plus généralement un mouvement en ignorant les nombreuses différences inhérentes à l'être humain qui produit le geste élémentaire. Le procédé d'identification est très robuste.

A titre d'exemple, la fréquence d'échantillonnage est de l'ordre de quelques centaines de Hz dans le cas d'une identification d'une battue de chef d'orchestre. La fréquence d'échantillonnage dépend du mouvement analysé par le procédé.

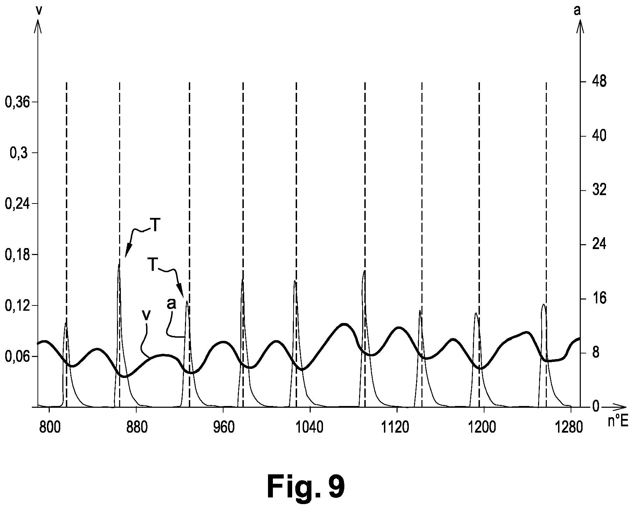

La figure 9 représente les temps désignés par T identifiés grâce au procédé selon l'invention, ce qui permet d'en déduire le tempo. V représente la vitesse de la baguette en m / échantillon, a représente l'angle en degrés, en fonction du numéro d'échantillon.

De manière avantageuse, on peut prévoir une ou des étapes pour rendre la détection du temps encore plus sûre, par exemple pour s'assurer qu'on ne décide pas qu'un nouveau temps a été marqué alors qu'un seul pic d'angle a été détecté.

Par exemple, on peut utiliser un booléen B pour indiquer si un temps a été marqué lors de la dernière détection. Par exemple, le booléen est rendu vrai lorsque la valeur d'angle est nulle ou faible, par exemple inférieure à 3°, ce qui signifie qu'il n'y a pas eu de changement de direction important. Sinon le booléen garde sa valeur précédente. Par conséquent tant que le booléen n'est pas rendu vrai, on ne peut décider qu'un nouveau temps a été marqué. En outre, à la détection d'un temps, on rend ce booléen faux. Ainsi de manière avantageuse, le procédé ne peut détecter deux temps successifs si la valeur de l'angle entre les vecteurs vitesse n'est pas repassée à une valeur faible ou nulle. On peut prévoir de manière additionnelle ou à la place de l'utilisation du booléen décrite ci-dessus de compter le nombre d'échantillons entre le pic de minimum de vitesse et le pic de maximum d'angle, si ce nombre dépasse une valeur seuil, par exemple 10, on considère qu'il ne s'agit pas de pics caractéristiques d'un temps ou plus généralement du passage d'un segment élément à un autre.

On peut également prendre en compte la survenue d'un maximum de vitesse qui apparaît sensiblement à la moitié du geste élémentaire ou segment élémentaire. On peut prévoir de vérifier que l'instant de survenance du maximum de vitesse est bien situé sensiblement à une durée égale des instants de survenance du pic de minimum de vitesse précédent et du pic de minimum de vitesse suivant. La même vérification peut être faite avec l'angle.

D'autres moyens encore peuvent être mis en oeuvre pour éviter une fausse détection de temps ou de changement de segments élémentaires.

De manière avantageuse, le réglage des constantes utilisées dans le traitement des informations fournies par les capteurs de position de la baguette, par exemple celles utilisées pour les filtrages et/ou le seuillage, pourrait être affiné en enregistrant des battues effectuées par plusieurs personnes et en extrayant des données moyennes sur leurs mouvements.

Selon une caractéristique avantageuse, on peut prévoir de détecter lorsque la baguette et plus généralement l'élément dont on souhaite détecter le mouvement est immobile afin de supprimer les détections parasites. Le système peut être équipé d'un module de détection d'arrêt.

Comme cela a été expliqué ci-dessus, de manière conventionnelle le temps correspond à la fin du geste élémentaire ou du segment élémentaire. Or l'utilisateur peut souhaiter qu'au contraire le temps corresponde au début du geste élémentaire ou segment élémentaire. Grâce à l'invention ceci peut être très facilement obtenu en ignorant le premier geste élémentaire, étant entendu que dans le cas d'une battue de chef d'orchestre le mouvement est périodique.

A partir de l'identification des temps successifs, le système peut déduire le tempo. En outre le procédé de détection peut permettre de reconnaître le type de battue utilisé, à 2, 3, 4 temps...

En outre, le procédé d'identification de geste élémentaire selon l'invention peut permettre également de régler le volume de l'orchestre virtuel, par exemple en considérant la rapidité de chacun des gestes élémentaires et/ou leur amplitude. En effet, le procédé d'identification selon l'invention connaît la vitesse de déplacement de la baguette, puisqu'il la calcule périodiquement, et son amplitude de déplacement puisqu'il connaît la position de la baguette. Par exemple, il peut être décidé que plus les gestes élémentaires sont amples, plus le volume sonore d'interprétation est élevé.

Le procédé d'identification est mis en oeuvre par un ordinateur qui est par exemple relié à un instrument type piano électronique ou orchestre virtuel. Une partition peut être lue par le piano électronique commandé par l'ordinateur. La lecture de la partition se fait temps par temps au fur et à mesure que le procédé d'identification identifie les temps du mouvement de la baguette.

Ce procédé permet une identification efficace et précise d'un mouvement comportant plusieurs gestes élémentaires, plus particulièrement du passage d'un geste élémentaire à un autre, ce qui permet une commande précise d'un dispositif basée sur ce changement de geste élémentaire. Par exemple, le procédé d'identification peut être utilisé pour extraire les segments élémentaires du vol d'un insecte par exemple ou encore les traits élémentaires qui composent des gestes d'écriture.

Les informations obtenues par le procédé selon l'invention peuvent par exemple permettre de commander un robot.

**Revendications**

1. Procédé d'identification d'un mouvement d'un objet comportant plusieurs gestes élémentaires, ledit procédé comportant les étapes de :

    a) mesure des positions absolues de l'objet dans l'espace au cours du temps,
    b) calcul d'une vitesse de l'objet et détection d'au moins une valeur de vitesse minimale prise par l'objet à partir des positions absolues de l'objet,
    c) calcul des angles entre deux vecteurs vitesse consécutifs et détection d'au moins une valeur d'angle maximale,
    d) identification de l'instant de passage d'un geste élémentaire à un autre à partir de l'instant de détection de la valeur minimale de la vitesse de l'objet et de l'instant de détection de la valeur maximale de l'angle.

2. Procédé d'identification selon la revendication 1, dans lequel lors de l'étape a), un filtrage des valeurs de position absolue de l'objet a lieu, par exemple un filtrage récursif d'ordre 1.

3. Procédé d'identification selon la revendication 1 ou 2, dans lequel lors de l'étape b) et/ou de l'étape c), un filtrage des valeurs de vitesse et/ou d'angle a ou ont lieu, par exemple un filtrage récursif d'ordre 1.

4. Procédé d'identification selon l'une des revendications 1 à 3, dans lequel lors de l'étape c), un seuillage de valeurs d'angle a lieu, rendant égale à zéro toute valeur inférieure ou égale à une valeur donnée.

5. Procédé d'identification selon l'une des revendications 1 à 4, dans lequel, après l'identification de l'instant du passage d'un geste élémentaire à un autre, un autre instant du passage d'un geste élémentaire à un autre geste élémentaire n'est identifié que si l'angle a pris au moins une valeur inférieure à une valeur donnée depuis la dernière identification.

6. Procédé d'identification des temps d'une battue d'un chef d'orchestre mettant en oeuvre le procédé d'identification selon l'une des revendications 1 à 5, dans lequel l'objet dont le mouvement est à identifier est une baguette.

7. Procédé d'identification des temps d'une battue d'un chef d'orchestre selon la revendication 6, comportant une étape de détermination d'un tempo.

8. Procédé de commande d'un orchestre virtuel et/ou d'un instrument de musique mettant en oeuvre le procédé d'identification des temps selon la revendication 7, le procédé de commande utilisant le tempo pour commander la lecture d'une partition par l'orchestre virtuel et/ou l'instrument de musique.

9. Procédé de commande selon la revendication 8, dans lequel le procédé commande un volume sonore d'interprétation de l'orchestre virtuel et/ou de l'instrument de musique en fonction de la vitesse de déplacement de l'objet et/ou d'une amplitude des gestes élémentaires.

10. Système d'identification du mouvement d'un objet comportant :

    - l'objet,
    - des moyens pour mesurer des positions absolues de l'objet dans l'espace au cours du temps,
    - des moyens de traitement des mesures fournies par les moyens de mesure des positions absolues, les moyens de traitement étant tels :
    - qu'ils calculent une vitesse de l'objet et détectent au moins une valeur de vitesse minimale prise par l'objet,
    - qu'ils calculent un angle entre deux vecteurs vitesse consécutifs et détectent au moins une valeur d'angle maximale,
    - qu'ils identifient l'instant de passage d'un geste élémentaire à un autre à partir de l'instant de détection de la valeur minimale de la vitesse de l'objet et de l'instant de détection de la valeur maximale de l'angle.

11. Système d'identification selon la revendication 10, dans lequel les moyens de mesure comportent un réseau de magnétomètres et l'objet comporte au moins un aimant permanent.

12. Système de commande d'un orchestre virtuel et/ou d'un instrument mettant en oeuvre un système d'identification selon la revendication 11, dans lequel l'objet est une baguette comportant l'aimant permanent et le réseau de magnétomètres est logé dans un boîtier en forme de tablette au-dessus duquel la baguette est destinée à être déplacée.

13. Système de commande selon la revendication 12, dans lequel l'aimant permanent est dans une zone de la baguette destinée à être dans une main d'un utilisateur.

**Fig. 1A**

**Fig. 1B**

**Fig. 2**

Fig. 3

Fig. 4

Fig. 5

Fig. 6

**Fig. 7**

$$P_n(x_n, y_n, z_n) \quad 100$$

$$F1: P_n = P_{n-1}*0.9 + P_n * 0.1 \quad 200$$

700

$$a_n$$

300

$$v_n$$

800

$$a_n < 8 => a_n = 0$$

400

$$F2: a_n = a_{n-1}*0.8 + a_n * 0.2$$

$$F3: v_n = v_{n-1}*0.95 + v_n * 0.05$$

900

$$a'_n \quad 1000$$

$$v'_n \quad 500$$

$$a'_n * a'_{n-1} \leq 0$$
$$ET\ a'_n \leq 0$$
$$ET\ B = 1? \quad 1100$$

$$v'_n * v'_{n-1} \leq 0$$
$$ET\ v'_n \geq 0? \quad 600$$

1200

## Fig. 8

**Fig. 9**

Europäisches
Patentamt

European
Patent Office

Office européen
des brevets

# RAPPORT DE RECHERCHE EUROPEENNE

Numéro de la demande

EP 17 16 7624

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 585 584 A (USA SATOSHI [JP]) 17 décembre 1996 (1996-12-17) | 1,4-10 | INV. G06K9/00 G10H1/40 |
| Y | * colonne 1, ligne 6 - ligne 10 * * colonne 2, ligne 3 - ligne 24 * * colonne 2, ligne 55 - ligne 56 * * colonne 3, ligne 36 - ligne 43 * * colonne 5, ligne 33 - ligne 40 * * colonne 6, ligne 6 - ligne 45 * * colonne 7, ligne 11 - ligne 50 * * colonne 8, ligne 11 - colonne 9, ligne 50 * * colonne 16, ligne 47 - ligne 50 * * figures 3A,3B,3C,4 * ----- | 2,3, 11-13 | |
| Y | WO 2010/092139 A2 (MOVEA SA [FR]; COMMISSARIAT ENERGIE ATOMIQUE [FR]; DAVID DOMINIQUE [FR] 19 août 2010 (2010-08-19) * page 12, ligne 24 - page 13, ligne 29 * ----- | 2,3 | |
| Y,D | WO 2013/144342 A2 (COMMISSARIAT ENERGIE ATOMIQUE [FR]) 3 octobre 2013 (2013-10-03) * alinéa [0001] * * alinéa [0019] - alinéa [0023] * * alinéa [0030] * * alinéa [0068] * * alinéa [0070] * * figure 1 * ----- | 11-13 | DOMAINES TECHNIQUES RECHERCHES (IPC) G06K G10H |
| A | US 5 875 257 A (MARRIN TERESA [US] ET AL) 23 février 1999 (1999-02-23) * colonne 2, ligne 29 - ligne 58 * * colonne 3, ligne 4 - ligne 45 * * colonne 6, ligne 60 - ligne 65 * * colonne 7, ligne 38 - colonne 8, ligne 8 * * colonne 9, ligne 5 - ligne 55 * ----- -/-- | 1,4-10 | |

Le présent rapport a été établi pour toutes les revendications

| Lieu de la recherche | Date d'achèvement de la recherche | Examinateur |
|---|---|---|
| La Haye | 12 juillet 2017 | Moreno, Marta |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 17 16 7624

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 5 663 514 A (USA SATOSHI [JP]) 2 septembre 1997 (1997-09-02) * colonne 1, ligne 6 - ligne 12 * * colonne 2, ligne 63 - colonne 3, ligne 65 * * colonne 8, ligne 12 - ligne 17 * * colonne 9, ligne 5 - ligne 65 * * colonne 10, ligne 33 - colonne 12, ligne 15 * * colonne 16, ligne 9 - ligne 50 * * colonne 23, ligne 51 - dernière ligne * * colonne 26, ligne 15 - ligne 23 * * colonne 26, ligne 39 - ligne 49 * * colonne 26, ligne 58 - ligne 60 * * figures 2,4,5,11,12,24 * ----- | 1,4-8,10 | |
| A | GB 2 071 389 A (CASIO COMPUTER CO LTD) 16 septembre 1981 (1981-09-16) * abrégé * * page 1, ligne 20 - ligne 37 * * page 1, ligne 124 - ligne 126 * * page 2, ligne 27 - ligne 29 * ----- | 1,6-13 | |
| A | CARLOS RENE ARGUETA ET AL: "Interacting with a Music Conducting System", 19 juillet 2009 (2009-07-19), HUMAN-COMPUTER INTERACTION. NOVEL INTERACTION METHODS AND TECHNIQUES, SPRINGER BERLIN HEIDELBERG, BERLIN, HEIDELBERG, XP019122167, ISBN: 978-3-642-02576-1 pages 654-663, * Section 2 * * Section 3.1 * ----- | 1,6-10 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 12 juillet 2017 | Moreno, Marta |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 17 16 7624

12-07-2017

| Document brevet cité au rapport de recherche | | Date de publication | Membre(s) de la famille de brevet(s) | | Date de publication |
|---|---|---|---|---|---|
| US 5585584 | A | 17-12-1996 | JP | 3307152 B2 | 24-07-2002 |
| | | | JP | H08305355 A | 22-11-1996 |
| | | | US | 5585584 A | 17-12-1996 |
| WO 2010092139 | A2 | 19-08-2010 | EP | 2396711 A2 | 21-12-2011 |
| | | | US | 2012062718 A1 | 15-03-2012 |
| | | | WO | 2010092139 A2 | 19-08-2010 |
| WO 2013144342 | A2 | 03-10-2013 | EP | 2831641 A2 | 04-02-2015 |
| | | | FR | 2988862 A1 | 04-10-2013 |
| | | | JP | 2015519543 A | 09-07-2015 |
| | | | US | 2015057969 A1 | 26-02-2015 |
| | | | WO | 2013144342 A2 | 03-10-2013 |
| US 5875257 | A | 23-02-1999 | AUCUN | | |
| US 5663514 | A | 02-09-1997 | AUCUN | | |
| GB 2071389 | A | 16-09-1981 | DE | 3102933 A1 | 17-12-1981 |
| | | | GB | 2071389 A | 16-09-1981 |
| | | | US | 4341140 A | 27-07-1982 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013144342 A

**Littérature non-brevet citée dans la description**

- Optical Tracking for Music and Dance Performance J. Paradiso, F. Sparacino, in ''Optical 3-D Measurement Techniques IV. Digital Baton. Herbert Wichmann Verlag, 1997, 11-18